# EUROPEAN PATENT SPECIFICATION

(11) **EP 0 855 956 B1**
(45) Date of publication and mention of the grant of the patent: **09.06.2004**
(21) Application number: 96935667.4
(22) Date of filing: 02.10.1996
(51) Int. Cl.: B32B 27/10, B65D 65/40

(54) **A PACKAGING LAMINATE AND A METHOD FOR PRODUCING THE PACKAGING LAMINATE, AND A CONTAINER PRODUCED FROM THE PACKAGING LAMINATE AND POSSESSING SUPERIOR OXYGEN GAS BARRIER PROPERTIES**
MEHRSCHICHTWERKSTOFF FÜR VERPACKUNGEN, VERFAHREN ZU EINER HERSSTELLUNG, UND EINE DARAUS HERGESTELLTE VERPACKUNG MIT HERVORRAGENDER SAUERSTOFFBARRIEREWIRKUNG
STRATIFIE DE CONDITIONNEMENT, SON PROCEDE DE PRODUCTION ET EMBALLAGE REALISE A PARTIR DE CE STRATIFIE POSSEDANT DES PROPRIETES DE BARRIERE D'OXYGENE SUPERIEURES

(30) Priority: 09.10.1995 SE 9503494
(43) Date of publication of application: 05.08.1998
(73) Proprietor: Tetra Laval Holdings & Finance SA, 1009 Pully (CH)
(72) Inventor: BENTMAR, Mats, S-233 37 Svedala (SE); BERLIN, Mikael, S-227 36 Lund (SE)
(74) Representative: Sundell, Hakan
(86) International application number: PCT/SE1996/001237
(87) International publication number: WO 1997/013639

(56) References cited:
- EP-A- 0 085 919
- EP-A- 0 293 098
- WO-A-97/02140
- GB-A- 2 115 770

## Description

### TECHNICAL FIELD

The present invention relates to a laminated packaging material for a configurationally stable, liquid-tight packaging container possessing superior oxygen gas barrier properties, the packaging material having a configurationally rigid but foldable core layer of paper or paperboard and a layer of polyvinyl alcohol applied on one side of the core layer and acting as oxygen gas barrier. The present invention further relates to a method of producing the laminated packaging material, as well as to configurationally stable, liquid-tight packaging containers possessing superior oxygen gas barrier properties, and being produced by fold forming of a sheet or a web of the laminated packaging material.

### BACKGROUND ART

It is previously known in the art to pack and transport liquid foods in configurationally stable, liquid-tight packaging containers of a laminated packaging material. Such so-called packaging laminates comprise a plurality of separate layers which together contribute to imparting to the finished package the desired mechanical and chemical protective properties for the packed product. A conventional packaging laminate has a configurationally rigid but foldable core layer of paper or paperboard which is coated on both sides with outer layers of plastic, preferably polyethylene, in order to protect the moisture-sensitive core layer and at the same time render the packaging laminate heat-sealable.

A packaging laminate with layers solely of paper or paperboard and plastic of the type described above makes possible the production of configurationally stable, liquid-tight packaging containers, but lacks tightness properties in respect of oxygen gas and other gases and must, therefore, be supplemented with one or more additional layers (so-called barrier layers) of material possessing gas tightness properties, in order to make the packaging laminate usable for packaging containers for oxygen gas sensitive products as well.

From Swedish Patent No. 440 519, it is previously known to supplement the above-described packaging laminate, for the purpose of rendering it oxygen gas tight, with a layer of polyvinyl alcohol which constitutes one of many other known examples of materials possessing superior oxygen gas barrier properties. According to Swedish Patent No, 440 519, a thin layer of an aqueous polyvinyl alcohol emulsion is applied by coating or similar covering operation direct onto the one surface of the paper or paperboard layer, whereafter the applied aqueous polyvinyl alcohol layer is dried for the formation of a continuous polyvinyl alcohol layer which covers the entire surface of one side of the paper or paperboard layer.

In order to prevent exaggerated penetration of the aqueous polyvinyl alcohol layer into the liquid-absorbent paper or paperboard layer, the aqueous polyvinyl alcohol emulsion should, according to Swedish Patent No. 440 519, also contain a thickening agent (e.g. Alginate) which aids in increasing the viscosity of the aqueous emulsion such that the penetrative powers of the aqueous emulsion into the subjacent paper or paperboard layer is greatly impeded. Since the oxygen gas tightness properties of the polyvinyl alcohol are highly dependent upon the moisture content of the polyvinyl alcohol and rapidly deteriorate in increasing moisture contents, the dried polyvinyl alcohol layer is protected with the aid of an outer liquid-tight plastic coating which is applied onto the side of the polyvinyl alcohol layer facing away from the paper or paperboard layer.

The packaging laminate according to Swedish Patent No. 440 519 suffers from serious shortcomings and drawbacks, which are intimately related not only to the moisture-sensitive oxygen gas tightness properties of the polyvinyl alcohol, but also to the physical and chemical surface nature of the paper or paperboard layer.

Because of the fibre structure of the paper or paperboard, respectively, a paper or paperboard surface is not entirely smooth, but has an inherent coarseness and surface unevenness. It is therefore necessary, in the method according to Swedish Patent No. 440 519, to apply the aqueous polyvinyl alcohol in larger quantities than would otherwise be required if the coating surface were entirely smooth, in order to "fill out" unevenness in the coarse fibre surface and thereby ensure that the applied layer becomes continuous and well-integrated. This excessive, but necessary coating quantity of polyvinyl alcohol entails undesirable but unavoidable raised material and production costs for the packaging laminate.

Given that the coated paper or paperboard is also dried in connection with drying of the applied aqueous polyvinyl alcohol layer, the risk is furthermore imminent that undesired so-called curling (with consequential risk of crack formation in the polyvinyl alcohol layer) occurs in the paper or paperboard layer, respectively, because of the excessive, difficultly regulated dryness in this layer.

Since the polyvinyl alcohol layer is moreover in direct contact with the subjacent, moisture-sensitive paper or paperboard layer, it speaks for itself that the polyvinyl alcohol layer in the prior art packaging laminate according to Swedish Patent No. 440 519 is hazardously exposed to penetration by moisture and wet which is easily absorbed by and transferred from the paper or paperboard layer, respectively, in the event of the leakage of moisture or wet from the other side of the paper or paperboard layer, respectively, facing away from the polyvinyl alcohol layer.

### OBJECTS OF THE INVENTION

One object of the present invention is therefore to obviate these drawbacks and shortcomings which are intimately associated with the above-described prior art packaging laminate.

A further object of the present invention is to realise a packaging laminate of the type disclosed by way of introduction without the use of excessive quantities of polyvinyl alcohol in order to achieve the well-integrated packaging laminate possessing the desired, superior oxygen gas tightness properties.

Yet a further object of the present invention is to realise a packaging laminate comprising an oxygen gas barrier layer of polyvinyl alcohol in which the polyvinyl alcohol layer is well protected against penetration by moisture and wet.

### SOLUTION

These objects will be attained according to the present invention by means of a packaging laminate possessing the characterizing features as set forth in the characterizing clause of appended Claim 1. Expedient and preferred embodiments of the packaging laminate according to the present invention have further been given the characterizing features as set forth in appended subclaims 2 to 6.

With the aid of the liquid-tight plastic layer applied between the core layer and the polyvinyl alcohol layer in the packaging laminate according to the present invention, there will thus be created a moisture barrier which effectively protects the polyvinyl alcohol layer from any possible penetration by moisture and wet from the liquid-absorbing core layer. The interjacent plastic layer also contributes in "filling out" unevenness in the coarse surface structure of the core layer, whereby a smoother subjacent surface will be achieved for the polyvinyl alcohol layer which may thereby be applied in smaller, but just as effective quantities as in the above-discussed prior art packaging laminate, in order to achieve the desired, regulated and unitary oxygen gas barrier properties in the finished packaging laminate.

The plastic consists of polyethylene which is well-compatible with polyvinyl alcohol and creates a good moisture barrier, at the same time as it effectively bonds to both the core layer and to the above-considered polyvinyl alcohol layer.

In order to protect the applied polyvinyl alcohol layer from penetration of moisture and wet also from the other side of the polyvinyl alcohol layer facing away from the core layer, it is appropriate according to the invention also to cover this side of the polyvinyl alcohol layer with a layer of plastic, whereby the polyvinyl alcohol layer in the finished packaging laminate lies well encapsulated and concealed between the two surrounding plastic layers which effectively protect the polyvinyl alcohol layer from oxygen gas tightness reducing penetration by moisture and wet from both sides of the polyvinyl alcohol layer.

The choice of plastic in this plastic layer covering the other side of the polyvinyl alcohol layer is not critical according to the present invention. Suitable plastics may, according to the present invention, be thermoplastics such as, for example, polyethylene which satisfies the moisture barrier requirement and which bonds with good adhesive strength to polyvinyl alcohol.

According to another aspect of the present invention, a simple and efficient method of producing the laminated packaging material according to the invention is realised.

The method according to the present invention has been given the characterizing features as set forth in appended Claim 7. Expedient and practical embodiments of the method according to the present invention have further been given the characterizing features as set forth in appended subclaims 8 to 13.

A major advantage which is afforded by the method according to the present invention as compared with the prior art method as disclosed above according to Swedish Patent No. 440 519 is that the drying (adjustment of moisture content) of the aqueous polyvinyl alcohol layer applied via the interjacent plastic layer is carried out without the risk of undesired so-called curling (with the consequential risk of crack formation and loss of tightness).

Furthermore, in the method according to the present invention, it is, as was pointed out above, possible to produce a well-integrated packaging laminate of the described type possessing the desired superior oxygen gas tightness properties employing considerably smaller quantities (approximately 50 per cent less) of polyvinyl alcohol than in the known method as disclosed in Swedish Patent No. 440 519.

According to yet a further aspect of the present invention, there will further be realised a configurationally stable packaging container possessing superior oxygen gas barrier properties of the type which, in a conventional manner, is produced by fold formation of a sheet or web-shaped packaging laminate according to the present invention which is preferably provided with decorative artwork and crease lines.

### BRIEF DESCRIPTION OF THE ACCOMPANYING DRAWINGS

The present invention will now be described in greater detail hereinbelow, with the aid of preferred embodiments of both the laminated packaging material and the method of its production, with reference to the accompanying Drawings, in which:
Fig. 1 schematically shows a cross section of a laminated packaging material according to the present invention;
Fig. 2 schematically illustrates a method of producing the laminated packaging material according to the present invention; and
Fig. 3 schematically illustrates the upper portion of a conventional, configurationally stable packaging container which has been produced by fold forming of a web-shaped laminated packaging material according to the present invention.

### DESCRIPTION OF PREFERRED EMBODIMENTS

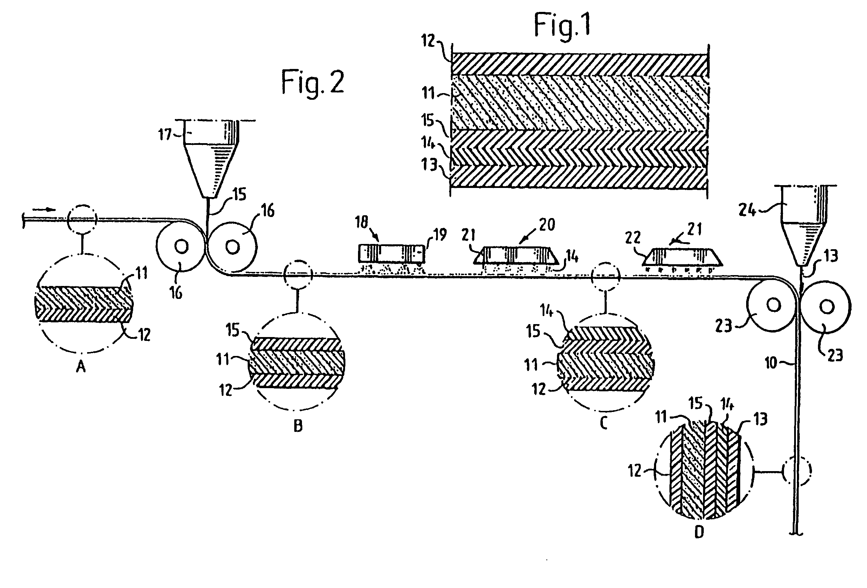

Fig. 1 thus schematically illustrates a cross section of a laminated packaging material (packaging laminate) according to the invention which carries the generic reference numeral 10. The packaging laminate 10 has a configurationally rigid, but foldable core layer of paper or paperboard 11, as well as outer liquid-tight plastic layers 12 and 13 of which the outer layer 12 (the uppermost in Fig. 1) is disposed on that side of the packaging laminate 10 which is intended to be turned to face outwards in a packaging container produced from the packaging laminate, while the outer layer 13 (the lowermost in Fig. 1) is correspondingly disposed on that side of the packaging laminate which is intended to be turned to face inwards in a packaging container produced from the packaging laminate.

The outer (uppermost) plastic layer 12 preferably consists of polyethylene, for example low density polyethylene (LDPE), which, on the one hand, affords protection to the packaging laminate 10 against the penetration of moisture and wet from the "outside" of the packaging laminate, and, on the other hand, renders the packaging laminate sealable by conventional, so-called heat sealing according to which mutually facing plastic layers may, by the supply of heat and pressure, effectively be united to one another by surface fusion for the formation of mechanically strong, liquid-tight sealing joints during conversion of the packaging laminate 10 into packaging containers. While not being germane to the present invention (and therefore not shown on the Drawings), it should be pointed out that the outer plastic layer 12 may, in addition, be provided with suitable printing ink patterns of a decorative and/ or informative nature (so-called decorative artwork) in order to identify, for example, a packed product.

The other outer (lowermost) plastic layer 13 also preferably consists of polyethylene, for example low density polyethylene (LDPE) which, in a corresponding manner, affords the packaging laminate 10 protection against penetration by moisture and wet from the "inside" of the packaging laminate and at the same time makes the packaging laminate sealable by conventional so-called heat sealing by means of which the inside of the packaging laminate may be united to the outside of the packaging laminate in mechanically strong, liquid-tight sealing joints during conversion of the packaging laminate 10 into packaging containers.

Between the core layer 11 and the second outer (lowermost) plastic layer 13, the packaging laminate 10 has a layer of polyvinyl alcohol 14 which serves as oxygen gas barrier layer and which is bonded to the core layer 11 via a sealing layer 15 applied between the core layer 11 and the polyvinyl alcohol layer 14. The sealing layer 15 consists of polyethylene, which bonds with good adhesive strength both to the core layer 11 and to the polyvinyl alcohol layer 14, at the same time as the sealing layer 15 gives the moisture and wet-sensitive polyvinyl alcohol layer 14 good protection against penetration of moisture and wet from the outside of the packaging laminate 10. The sealing layer 15, which is in direct contact with the core layer 11, also fills out inherent unevenness in the coarse surface structure of the core layer and forms a smooth subjacent surface for the polyvinyl alcohol layer 14.

The essential feature in the packaging laminate 10 according to the present invention is, as shown in Fig. 1, that the moisture and wet-sensitive oxygen gas barrier layer of polyvinyl alcohol 14 lies well encapsulated and concealed between surrounding, liquid-tight plastic layers 15 and 13 and thereby runs no risk of losing its oxygen gas tightness properties because of the penetration of moisture and wet from the outside and/or inside of the packaging laminate.

Fig. 2 schematically illustrates a method according to the present invention for producing the above-described packaging laminate 10. For the purposes of clarity, the same reference numerals as in Fig. 1 have been employed to designate the same or corresponding details in Fig. 2.

A web of paper or paperboard 11 which, on its one side, is coated with a layer of plastic 12 as shown on enlarged scale in the encircled region A to the left in Fig. 2, is led through the nip between two rotating rollers 16, 16, at the same time as the other (uncoated) side of the web is coated with a layer of plastic 15 which is extruded on the web by means of an extruder 17. The now double-side coated web of paper or paperboard (see the enlarged cross section in encircled region B) is led further to a surface treatment station at 18 where the applied plastic layer 15 is subjected to an adhesion-improving surface treatment, for example a corona treatment, with the aid of a suitable surface treatment device 19, for example a corona device.

The surface treated web is led further to a coating or covering station at 20 where an aqueous emulsion of polyvinyl alcohol is applied in the form of a thin aqueous layer on the web's surface treated plastic layer 15 by means of a suitable coating or application apparatus 21 for the formation of the cross sectional structure illustrated on an enlarged scale in the encircled region C.

The polyvinyl alcohol-coated web is led further to a drying station at 21 where the moisture content in the aqueous polyvinyl alcohol layer 14 is adjusted by the removal or vaporisation of water with the aid of a suitable drying apparatus 22.

Finally, the web with the moisture content adjusted polyvinyl alcohol layer 14 is led through the nip between two rotating rollers 23 at the same time as one (or possibly more) layer of molten plastic 13 is applied to the polyvinyl alcohol layer 14 with the aid of an extruder 24 for the formation of the finished packaging laminate 10 displaying the cross sectional structure shown on an enlarged scale in the encircled region D.

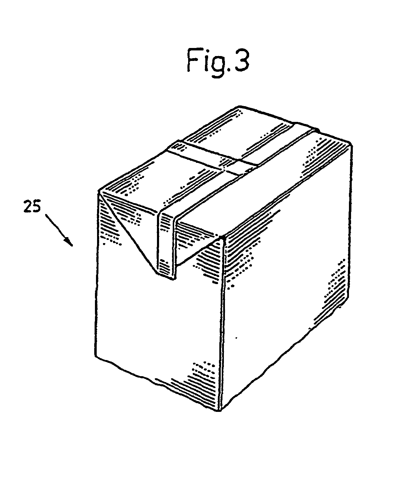

From a sheet or web-shaped packaging laminate 10 according to the invention, configurationally stable, liquid-tight packaging containers 25 possessing superior oxygen gas tightness properties may be produced by fold formation in a per se known manner. One example of such a conventional packaging container is schematically illustrated in Fig. 3.

Fig. 3 shows the upper portion of a known packaging container 25 of the Tetra Brik® type, which is produced with the aid of modern, rational packaging machines of the type that form, fill and seal packages from a web-shaped, preferably creased and decorated packaging laminate. Since such packaging containers as well as the method of producing them are well known to persons skilled in the art, it is superfluous to describe them in greater detail here. However, the principle is that the web-shaped packaging laminate is first reformed into a tube which is filled with the desired contents, in this case an oxygen gas sensitive product, and is thereafter divided into closed, cushion-shaped packages by repeated transverse seals of the tube below the current level of the contents in the tube. The packages are separated from one another by incisions in the transverse sealing zones and are given the desired final geometric configuration, normally parallelepipedic, as shown in Fig. 3, by a final fold formation and sealing operation.

It will thus have been apparent from the foregoing that the present invention effectively obviates the previously discussed shortcomings and drawbacks inherent in the prior art technique, and, in a simple manner and employing conventional technology and equipment, makes possible the production of a laminated packaging material for configurationally stable, liquid-tight packaging containers possessing superior oxygen gas tightness properties. While the present invention has been described above with reference to certain preferred embodiments of both the packaging laminate proper and the method by which it is produced, it should be observed that the present invention is not restricted exclusively to these embodiments, which have been specifically presented and described in order to illustrate the present invention. It will be obvious to a person skilled in the art that numerous variations and modifications are possible without departing from the spirit and scope of the inventive concept as this is defined in the appended Claims.

## Claims

1. A laminated packaging material for a configurationally stable, liquid-tight packaging container possessing superior oxygen gas barrier properties, said packaging material having a configurationally rigid but foldable core layer of paper or paperboard (11), and a layer of polyvinyl alcohol (14) applied as oxygen gas barrier on one side of the core layer, **characterized in that** the polyvinyl alcohol layer (14) is bonded to the core layer (11) by a layer of polyethylene (15) applied between the polyvinyl alcohol layer and the core layer.

2. The laminated packaging material as claimed in Claim 1, **characterized in that** the other side of the polyvinyl alcohol layer (14) facing away from the core layer (11) is covered by a layer of plastic (13) applied on the polyvinyl alcohol layer.

3. The laminated packaging material as claimed in Claim 2, **characterized in that** the plastic layer (13) on said other side of the polyvinyl alcohol layer (14) consists of a thermoplastic.

4. The laminated packaging material as claimed in Claim 2 or 3, **characterized in that** the plastic layer (13) on said other side of the polyvinyl alcohol layer (14) consists of polyethylene.

5. A method of producing a laminated packaging material as claimed in Claim 1, **characterized in that** a web of paper or paperboard (11) is coated on its one side with a layer of polyethylene (15); **that** the coated side of the web is coated with a layer of aqueous polyvinyl alcohol (14) which thereafter, for the purposes of adjustment of moisture content, is dried for the removal or vaporisation of water; and that the moisture content adjusted or dried polyvinyl alcohol layer (14) of the web is coated with an outer layer of plastic (13).

6. The method as claimed in Claim 5, **characterized in that** the thin aqueous polyvinyl alcohol layer (14) is applied on the plastic film by a coating operation.

7. The method as claimed in Claim 5 or 6, **characterized in that** the thin aqueous polyvinyl alcohol layer (14) is applied on the plastic film in a quantity of approximately 10 g/m².

8. The method as claimed in any of Claims 5 to 7, **characterized in that** the plastic film (15) is subjected to an oxidising surface treatment prior to application of the thin aqueous polyvinyl alcohol layer (14).

9. The method as claimed in Claim 8, **characterized in that** the oxidising surface treatment is a corona treatment.

10. The method as claimed in any of Claims 5 to 9, **characterized in that** the plastic layer (15) is applied by extrusion.

11. A configurationally stable, liquid tight packaging container (25) possessing superior oxygen gas barrier properties, **characterized in that** it is produced by fold formation of a sheet or web-shaped, laminated packaging material (10) according to any of Claims 1 to 4.

## Patentansprüche

1. Mehrschichtiges Verpackungsmaterial für einen formstabilen, flüssigkeitsdichten Verpackungsbehälter, der eine hervorragende Sauerstoffbarrierewirkung hat, wobei das Verpackungsmaterial eine formsteife aber faltbare Kernschicht aus Papier oder Karton (11) und eine Schicht aus Polyvinylalkohol (14), die als Sauerstoffbarriere auf einer Seite der Kernschicht angebracht bzw. aufgebracht ist, aufweist, **dadurch gekennzeichnet, dass** die Polyvinylalkohol-Schicht (14) mit der Kernschicht (11) über eine Schicht aus Polyethylen (15) verbunden ist, die zwischen der Polyvinylalkohol-Schicht und der Kernschicht angebracht bzw. aufgebracht ist.

2. Mehrschichtiges Verpackungsmaterial gemäß Anspruch 1, **dadurch gekennzeichnet, dass** die andere Seite der Polyvinylalkohol-Schicht (14), die von der Kernschicht (11) abgewandt ist, mit einer Kunststoffschicht (13) bedeckt ist, die auf die Polyvinylalkohol-Schicht aufgebracht bzw. angebracht wird.

3. Mehrschichtiges Verpackungsmaterial gemäß Anspruch 2, **dadurch gekennzeichnet, dass** die Kunststoffschicht (13) auf dieser anderen Seite der Polyvinylalkohol-Schicht (14) aus einem Thermoplast besteht.

4. Mehrschichtiges Verpackungsmaterial gemäß Anspruch 2 oder 3, **dadurch gekennzeichnet, dass** die Kunststoffschicht (13) auf dieser anderen Seite der Polyvinylalkohol-Schicht (14) aus Polyethylen besteht.

5. Verfahren zur Herstellung eines mehrschichtigen Verpackungsmaterials gemäß Anspruch 1, **dadurch gekennzeichnet, dass** eine Bahn aus Papier oder Karton (11) auf einer Seite mit einer Polyethylen-Schicht (15) beschichtet wird; dass die beschichtete Seite der Bahn mit einer Schicht aus wässrigem Polyvinylalkohol (14) beschichtet wird, das dann zur Anpassung des Feuchtigkeitsgehalts durch Entfernen oder Verdampfen von Wasser getrocknet wird; und dass die im Feuchtigkeitsgehalt angepasste oder getrocknete Polyvinylalkohol-Schicht (14) der Bahn mit einer äußeren Kunststoffschicht (13) beschichtet wird.

6. Verfahren gemäß Anspruch 5, **dadurch gekennzeichnet, dass** die dünne wässrige Polyvinylalkohol-Schicht (14) auf dem Kunststoffilm durch einen Beschichtungsvorgang aufgebracht bzw. angebracht wird.

7. Verfahren gemäß Anspruch 5 oder 6, **dadurch gekennzeichnet, dass** die dünne wässrige Polyvinylalkohol-Schicht (14) auf dem Kunststoffilm in einer Menge von ungefähr 10g/m² angebracht wird.

8. Verfahren gemäß einem der Ansprüche 5 bis 7, **dadurch gekennzeichnet, dass** der Kunststoffilm (15) einer oxidierenden Oberflächenbehandlung unterzogen wird, bevor die dünne wässrige Polyvinylalkohol-Schicht (14) angebracht bzw. aufgebracht wird.

9. Verfahren gemäß Anspruch 8, **dadurch gekennzeichnet, dass** die oxidierende Oberflächenbehandlung eine Korona-Behandlung ist.

10. Verfahren gemäß einem der Ansprüche 5 bis 9, **dadurch gekennzeichnet, dass** die Kunststoffschicht (15) durch Extrusion angebracht bzw. aufgebracht wird.

11. Formstabiler, flüssigkeitsdichter Verpackungsbehälter (25), der eine hervorragende Sauerstoffbarrierewirkung aufweist, **dadurch gekennzeichnet, dass** er durch Faltformen eines blatt- oder bahnenförmigen mehrschichtigen Verpackungsmaterials (10) gemäß einem der Ansprüche 1 bis 4 hergestellt wird.

## Revendications

1. Matériau stratifié de conditionnement pour un conteneur de conditionnement étanche aux liquides et de configuration stable, possédant des propriétés supérieures de barrage à l'oxygène gazeux, ledit matériau de conditionnement ayant une couche centrale de configuration rigide mais pliable formée de papier ou de carton (11) et une couche d'alcool polyvinylique (14) appliquée en tant que barrière à l'oxygène gazeux sur une face de la couche centrale, **caractérisé en ce que** la couche d'alcool polyvinylique (14) est collée sur la couche centrale (11) au moyen d'une couche de polyéthylène (15) appliquée entre la couche d'alcool polyvinylique et la couche centrale.

2. Matériau stratifié de conditionnement selon la revendication 1, **caractérisé en ce que** l'autre face de la couche d'alcool polyvinylique (14) située à distance de la couche centrale (11) est recouverte par une couche de matière plastique (13) appliquée sur la couche d'alcool polyvinylique.

3. Matériau stratifié de conditionnement selon la revendication 2, **caractérisé en ce que** la couche de matière plastique (13) sur ladite autre face de la couche d'alcool polyvinylique (14) est constituée d'une matière thermoplastique.

4. Matériau stratifié de conditionnement selon la revendication 2 ou 3, **caractérisé en ce que** la couche de matière plastique (13) sur ladite autre face de la couche d'alcool polyvinylique (14) est constituée de polyéthylène.

5. Procédé de production d'un matériau stratifié de conditionnement selon la revendication 1, **caractérisé en ce qu'**une bande de papier ou de carton (11) est revêtue de polyéthylène (15) sur l'une de ses faces, **en ce que** la face revêtue de la bande est revêtue d'une couche d'alcool polyvinylique aqueux (14) qui, ensuite, afin d'ajuster la teneur en humidité, est séchée pour l'élimination ou l'évaporation de l'eau, et **en ce que** la couche d'alcool polyvinylique (14) de la bande, séchée ou ayant subi un ajustement de la teneur en humidité, est revêtue d'une couche externe de matière plastique (13).

6. Procédé selon la revendication 5, **caractérisé en ce que** la couche mince d'alcool polyvinylique aqueux (14) est appliquée sur le film de matière plastique au moyen d'une opération d'enduction.

7. Procédé selon la revendication 5 ou 6, **caractérisé en ce que** la couche mince d'alcool polyvinylique aqueux (14) est appliquée sur le film de matière plastique en une quantité d'environ 10 g/m².

8. Procédé selon l'une quelconque des revendications 5 à 7, **caractérisé en ce que** le film de matière plastique (15) est soumis à un traitement superficiel d'oxydation avant l'application de la couche mince d'alcool polyvinylique aqueux (14).

9. Procédé selon la revendication 8, **caractérisé en ce que** le traitement superficiel d'oxydation est un traitement à décharge corona.

10. Procédé selon l'une quelconque des revendications 5 à 9, **caractérisé en ce que** la couche de matière plastique (15) est appliquée par extrusion.

11. Conteneur de conditionnement (25) de configuration stable et étanche aux liquides, possédant des propriétés supérieures de barrage à l'oxygène gazeux, **caractérisé en ce qu'**on le produit grâce à la formation de plis d'un matériau stratifié de conditionnement (10), en forme de feuille ou de bande, selon l'une quelconque des revendications 1 à 4.
